# EUROPÄISCHE PATENTANMELDUNG

(11) **EP 2 319 298 A2**
(43) Veröffentlichungstag der Anmeldung: **11.05.2011**
(21) Anmeldenummer: 10450168.9
(22) Anmeldetag: 04.11.2010
(51) Int. Cl.: A01K 1/01

(54) **Entmistungsanlage**

(30) Priorität: 09.11.2009 AT 7022009 U
(71) Anmelder: Schauer Agrotronic GmbH, 4731 Prambachkirchen (AT)
(72) Erfinder: Schauer, Herbert, 4731 Prambachkirchen (AT)
(74) Vertreter: Hübscher, Helmut

(57) **Zusammenfassung**

Bei einer Entmistungsanlage, insbesondere für Laufställe, mit einem durch Seilzüge (11, 12) entlang einer Kotrinne (1) hin- und herverstellbar geführten Pendelschieber (6), ist der Schieberbalken (6) mit an seinen Seitenenden vorgesehenen Führungselementen (7) nur am Seitenrandbereich (4) der Kotrinne (1) geführt, wobei die Seilzüge (11, 12) am oder oberhalb des Rinnenbodens (2) an den Pendelschieber (6) anschließend verlaufend vorgesehen sind.

## Beschreibung

Die Erfindung betrifft eine Entmistungsanlage, die insbesondere für Laufställe gedacht ist, aber auch in anderen Ställen Verwendung finden kann, mit einem durch Seilzüge entlang einer Kotrinne hin- und herverstellbar geführten Pendelschieber.

Bei bekannten Entmistungsanlagen dieser Art ist der Pendelschieber mit einem schwertartigen Fortsatz in einem Schlitz, beispielsweise einem Profilschlitz, des Rinnenbodens geführt. Dieser Schlitz kann aus dem Beton des Rinnenbodens gefertigt sein, oder aus einem in den Rinnenboden eingelegten entsprechenden Profil bestehen. Die Seile greifen am Schieber an und können oberhalb des Rinnenbodens oder teilweise in den Schlitz eingreifend verlegt werden. Der Schieber selbst fördert durch seine Formgestaltung oder durch nur in der einen Verstellrichtung wirksamen Mitnehmer den Mist zu dem einen Ende der Kotrinne und gibt ihm dort entweder an eine Mistsammelstelle oder an einen weiteren, z. B. quer angeordneten Förderer, ab. Der zwingend notwendige Schlitz im Rinnenboden ist der Verschmutzung ausgesetzt und es ergeben sich aufwendige Formen im Unterbau der Kotrinne.

Aufgabe der Erfindung ist die Schaffung einer Entmistungsanlage, welche die aufgezeigten Schwierigkeiten vermeidet. Eine Teilaufgabe der Erfindung besteht darin, eine Konstruktion zu schaffen, bei der unabhängig von der Länge der Kotrinne gleiche Elemente für den Pendelschieber und seine Führung Verwendung finden können.

Die Erfindung besteht im Wesentlichen darin, dass der Schieberbalken mit an seinen Seitenenden vorgesehenen Führungsstücken nur am Seitenrandbereich der Kotrinne geführt ist, wobei die Seilzüge am oder oberhalb des Rinnenbodens an den Pendelschieber anschließend verlaufend vorgesehen sind.

Durch diese relativ einfachen Maßnahmen wird ein wesentliche Vereinfachung im Aufbau der Kotrinne und beim Betrieb erreicht, wobei auch Störungen in den Seilführungen sowie Reinigungsarbeiten im gesamten Bereich wegen der leichten Zugänglichkeit der Elemente rasch und einfach behoben bzw. durchgeführt werden.

Um eine sichere und genaue Führung des Pendelschiebers zu erzielen, wird in Weiterbildung der Erfindung vorgesehen, dass der Pendelschieber mit an seinen Enden befestigten Führungselementen in sich an den Seitenwänden der Kotrinne abstützenden Längsführungsprofilschienen eingreift. Die Führungselemente werden nach einer Ausführung von den ihnen passenden Profilschienen gleitverstellbar gehalten. Vorzugsweise wird aber eine Ausführung der Führungselemente als Rollenführungen gewählt, deren Rollen in den Profilschienen laufen.

Zur Erfüllung der erwähnten Teilaufgabe der Möglichkeit der Verwendung gleicher Elemente bei verschieden langen Kotrinnen wird in Weiterbildung der Erfindung vorgesehen, dass die Längsführungsschienen sich in der Kotrinne nur über einen Teil der Förderlänge erstrecken und, vorzugsweise in ihren Endbereichen, mit Mitnehmern, z. B. Anschlägen für den Pendelschieber versehen sind, sodass der Pendelschieber die Führungsschienen in beiden Verstellrichtungen über die Förderlänge mitschleppt, dabei mit den Führungsschienen an den Seitenwänden der Kotrinne geführt bleibt und sich wenigstens bei seinem Ausschieben aus den Endstellungen in der Führungsschiene führt. Wie schon erwähnt wurde, sind beim Betrieb die Anfahrbereiche an den Enden für eine exakte Führung kritisch. Hier ist bei der obigen Ausführung eine sichere Zwangsführung durch die Führungsschienen gewährleistet. Im übrigen Förderbereich ergibt sich durch die Gleitverstellung der Führungsschienen an den Seitenwandbereichen der Kotrinne eine sichere, ausreichende Abstützung.

Konstruktiv wird zur zwangsweisen Gewährleistung der zuletzt erwähnten Bedingungen vorgesehen, dass die Führungsschienen an den Endbereichen Fangrasten tragen, die mit feder- oder gewichtsbelasteten Haltern zusammenwirkend die Führungsschienen in den Endstellungen bis zu ihrer Mitnahme durch die Mitnehmeranschläge od. dgl. bei der Verstellung des Pendelschiebers in die Gegenrichtung festhalten.

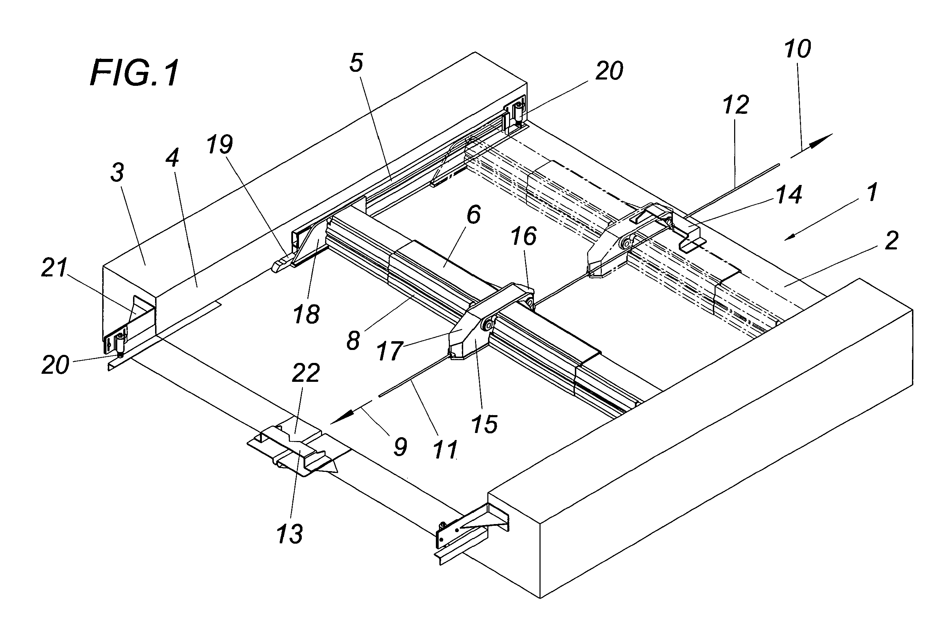

Weitere Einzelheiten und Vorteile des Erfindungsgegenstandes entnimmt man der nachfolgenden Zeichnungsbeschreibung. In der Zeichnung ist der Erfindungsgegenstand beispielsweise veranschaulicht. Es zeigen
- Fig. 1: eine erfindungsgemäße Entmistungsanlage bei verkürzt dargestellter Kotrinne im Schaubild, wobei der Pendelschieber in einer Mittelstellung voll dargestellt wurde und in einer zweiten Stellung nahe dem in der Zeichnung hinteren Endbereich der Kotrinne strichpunktiert veranschau- licht ist,

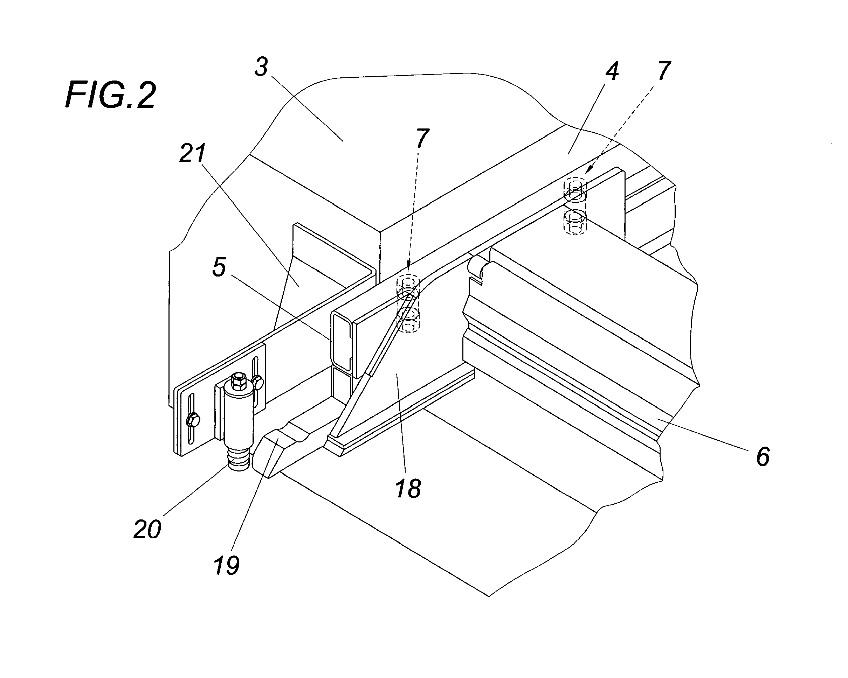

- Fig. 2: ein Detail zur Fig. 1 mit dem nahe der einen Endstellung befindlichen Pendelschieber und
- Fig. 3: im größeren Maßstab einen Teilschnitt mit einer in einer Profilschiene geführten Rollenführung.

Die Entmistungsanlage besitzt eine Kotrinne 1 mit ebenem Boden 2 und Seitenwänden 3, deren Innenseiten 4 Führungsflächen bilden.

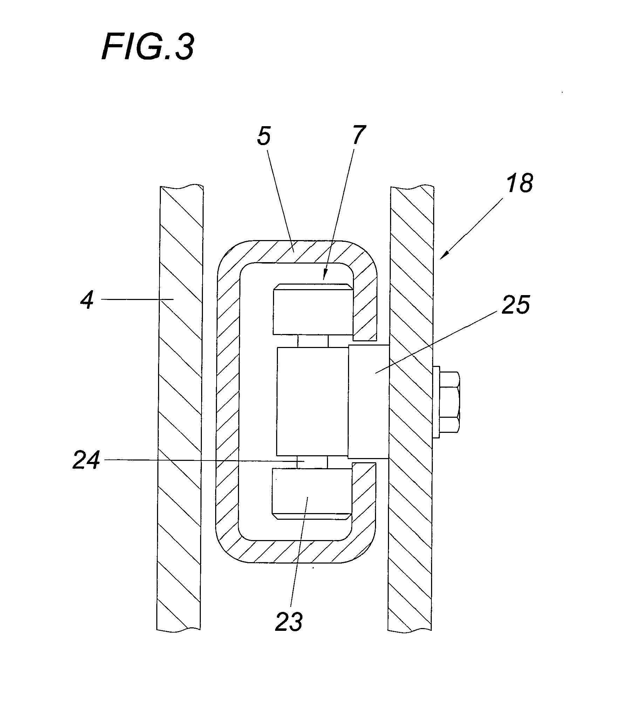

Anliegend an diese Führungsflächen 4 sind nur über einen Teil der Förderlänge reichende Führungsprofilschienen 5 vorgesehen, in welche der Balken 6 eines Pendelschiebers mit in Fig. 3 näher dargestellten Rollenführungen 7 eingreift. Im unteren Randbereich besitzt der Pendelschieber 6 einen beim Förderhub nach Pfeil 9 am Boden 2 aufliegenden Abstreifer 8, der beim Gegenhub nach Pfeil 10 wegschwenkt oder sich leicht anhebt, sodass er im wesentlichen ohne Mistmitnahme in die Ausgangsstellung zurückfahren kann.

Zur Betätigung des Pendelschiebers 6 dienen zwei Seilzüge 11 und 12, die zu gesteuerten Seilwinden führen und im Endbereich der Kotrinne 1 unter Querbügeln 13, 14 hindurchgeführt sind. Für die Mitnahme des Schiebebalkens 6 sind in der Mitte dieses Balkens vorspringende Seilhalterungen 15, 16 in einem gemeinsamen Tragstück 17 vorgesehen. Der Schieberbalken 6 ist mit seitlichen Tragplatten 18 versehen. Mitnehmeranschläge bewirken, dass der Schieberbalken in keiner Stellung aus der zugehörigen Führungsschiene 5 austreten kann und diese im Mittelbereich des Förder- bzw. Rücklaufhubes mitnimmt, wobei sich der Schieberbalken 6 jeweils in der Nähe des Endes der Führungsschienen 5 befindet. Schließlich tragen diese Führungsschienen 5 über die Enden vorstehende Rastleisten 19, die in den Endstellungen des Schiebers 6 mit federbelasteten Sperrriegeln 20 zusammenwirken, die von Trägern 21 an den Stirnseiten der Wandungen 3 gehalten sind.

Wenn der Schieber bei der Verstellung in Richtung des Pfeiles 9 das Ende der Kotrinne 1 erreicht, rastet sein Teil 15 in eine Kerbe 22 am Teil 13 ein. Dieser Teil kann auch Bestandteil einer Umsteuereinrichtung sein, die die Winde des Seiles 11 ab- und die Winde des Seiles 12 einschaltet. Dabei gelangt die Kerbe der Rastleiste 19 in den Eingriffsbereich des Sperrriegels 20, der nun beim Rücklauf des Pendelschiebers 6 die Führungsschiene 5 festhält, bis der Schieber den Anschlag am anderen Ende der Führungsschiene 5 erreicht und die Verrastung bei der Weiterfahrt löst, bis die volle Rücklaufstellung erreicht ist und dort die Riegel 20 in die Verrastung 19 einrasten. Die Profilschiene 5 bleibt also beim Rückhub des Förderbalkens 6 am Vorderende der Kotrinne 1 und führt beim Rücklauf den Balken 6 bis zum Erreichen des zweiten Anschlages, wonach der Balken 6 die Führungsschiene 5 bis in die andere Endstellung mitnimmt und dann bis zum Erreichen seiner Endstellung sowie beim folgendem Arbeitshub wieder von der Führungsschiene 5 geführt wird, die zwischen den beiden Endstellungen an der Wand 4 gleitend Führungsschiene 5 und Balken 6 abstützt.

Wir aus Fig. 3 ersichtlich ist, besteht eine Rollenführung 7 aus zwei Laufrollen 23, die auf einer Achse 24 gelagert sind, die ihrerseits über ein Zwischenstück 25 vom Pendelschieber getragen wird.

## Patentansprüche

1. Entmistungsanlage, insbesondere für Laufställe, mit einem durch Seilzüge entlang einer Kotrinne hin- und herverstellbar geführten Pendelschieber, **dadurch gekennzeichnet, dass** der Schieberbalken (6) mit an seinen Seitenenden vorgesehenen Führungselementen (7) nur am Seitenrandbereich (4) der Kotrinne (1) geführt ist, wobei die Seilzüge (11, 12) am oder oberhalb des Rinnenbodens (2) an den Pendelschieber (6) anschließend verlaufend vorgesehen sind.

2. Entmistungsanlage nach Anspruch 1, **dadurch gekennzeichnet, dass** der Pendelschieber (6) mit den an seinen Enden vorgesehenen Führungselementen (7) in sich an den Seitenwänden (4) der Kotrinne (1) abstützenden Längsführungsprofilschienen (5) eingreift.

3. Entmistungsanlage nach Anspruch 2, **dadurch gekennzeichnet, dass** als Führungselemente (7) Rollenführungen vorgesehen sind, deren Rollen (23) in den Profilschienen (5) laufen.

4. Entmistungsanlage nach den Ansprüchen 2 und 3, **dadurch gekennzeichnet, dass** die Längsführungsschienen (5) sich in der Kotrinne (1) nur über einen Teil der Förderlänge erstrecken und, vorzugsweise in ihren Endbereichen, mit Mitnehmern, z. B. Anschlägen für den Pendelschieber (6) versehen sind, sodass der Pendelschieber (6) die Führungsschienen (5) in beiden Verstellrichtungen (9, 10) über die Förderlänge mitschleppt, dabei mit den Führungsschienen (5) an den Seitenwänden (4) der Kotrinne (1) geführt bleibt und sich wenigstens bei seinem Ausschieben aus den Endstellungen in der Führungsschiene (5) führt.

5. Entmistungsanlage nach Anspruch 4, **dadurch gekennzeichnet, dass** die Führungsschienen (5) an den Endbereichen Fangrasten tragen, die mit federoder gewichtsbelasteten Haltern (20) zusammenwirkend die Führungsschienen (5) in den Endstellungen bis zu ihrer Mitnahme durch die Mitnehmeranschläge od. dgl. bei der Verstellung des Pendelschiebers (6) in die Gegenrichtung festhalten.
